Europäisches Patentamt

**European Patent Office**

Office européen des brevets

(19)

(11) Publication number : **0 135 322 B2**

(12)   # NEW EUROPEAN PATENT SPECIFICATION

(45) Date of publication of the new patent
specification : **19.08.92 Bulletin 92/34**

(51) Int. Cl.⁵ : **G11C 13/06, G11B 11/00, G02F 1/09**

(21) Application number : **84305192.1**

(22) Date of filing : **31.07.84**

(54) **An optical magnetic recording member.**

(30) Priority : **15.08.83 JP 148038/83**

(43) Date of publication of application :
**27.03.85 Bulletin 85/13**

(45) Publication of the grant of the patent :
**16.03.88 Bulletin 88/11**

(45) Mention of the opposition decision :
**19.08.92 Bulletin 92/34**

(84) Designated Contracting States :
**CH DE FR GB IT LI NL**

(56) References cited :
**EP-A- 0 111 988**
**EP-A- 0 122 030**
**DE-A- 2 045 219**
**DE-A- 3 200 661**
**DE-B- 1 774 764**
**DE-B- 2 340 475**
**FR-A- 2 485 241**
**GB-A- 1 288 519**
**US-A- 3 928 870**
**US-A- 4 239 835**

(73) Proprietor : **NIHON SHINKU GIJUTSU
KABUSHIKI KAISHA
2500, Hagizono
Chigasaki-shi Kanagawa-ken (JP)**

(72) Inventor : **Nakamura, Kyuzo
672-20, Yachimata Ho Yachimatamachi
Inba-gun Chiba-ken (JP)**
Inventor : **Ota, Yoshifumi
129, Yachimata Ni Yachimatamachi
Inba-gun Chiba-ken (JP)**
Inventor : **Asaka, Tsutomu
617-2, Asahi Yachimatamachi
Inba-gun Chiba-ken (JP)**

(74) Representative : **Billington, Lawrence Emlyn et
al
HASELTINE LAKE & CO Hazlitt House 28
Southampton Buildings Chancery Lane
London WC2A 1AT (GB)**

EP 0 135 322 B2

## Description

This invention relates to an optical magnetic (magneto-optical) recording member. Recently, as a new magnetic recording system capable of high density recording, an optical magnetic recording system has been proposed.

A proposed medium for such a recording system is an MnBi thin film or a rare earth element-Fe, Co amorphous thin film, and in this case, the film is required to have the following two properties. One of them is that the film is a perpendicular magnetic film which has a strong magnetic anisotropy in the film thickness direction thereof, and the other is that the polarization rotation angle thereof is large. If, however, the foregoing thin film is actually used for an optical magnetic recording member, the polarisation rotation angle or Kerr rotation angle is not sufficiently large, so that this causes difficulty in its practical use.

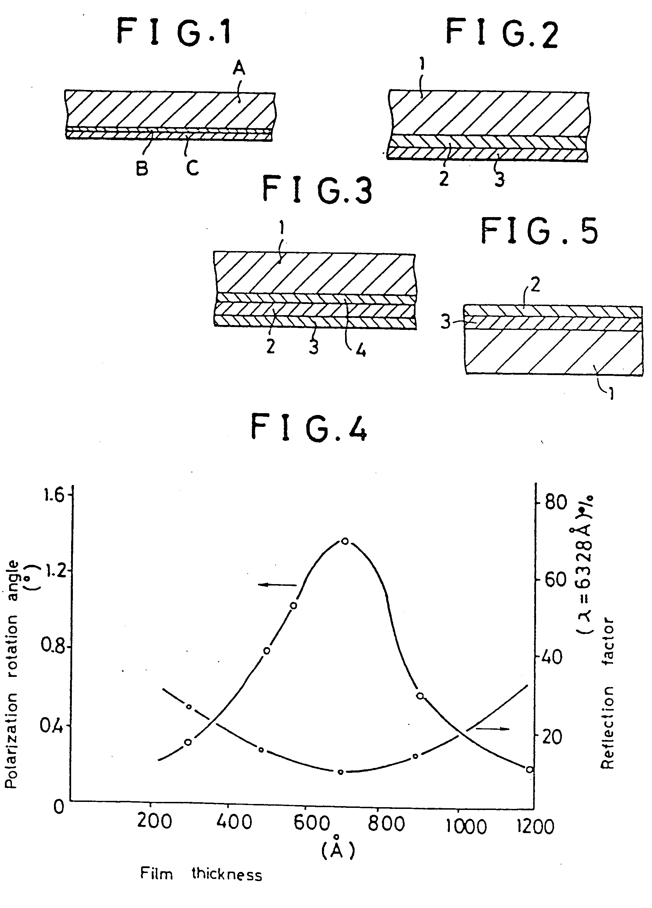

As a means for improving this property, there has been hitherto proposed a film such as that shown in Fig. 1, in which a perpendicular magnetic film B of MnBi, TbFe or the like of 50-200Å in thickness formed on a transparent substrate A is provided thereon with a reflection film C made of Al, Cu or the like.

The polarization rotation angle of this film is increased because of the combination of (1) such a Kerr rotation that the polarization plane is rotated when a laser beam is reflected at a front surface of the perpendicular magnetic film B and (2) such a Faraday rotation that the polarization plane is rotated in the course of the laser beam being: transmitted by the perpendicular magnetic film B; reflected at the reflection film (C); transmitted again by the perpendicular magnetic film B; and emitted out of the surface thereof. In this case, the amount of Faraday rotation by which the polarization plane is rotated when the laser beam is transmitted by the perpendicular magnetic film B is in proportion to the transmitting distance, that is: double the thickness of the film B, so that the polarization rotation angle is increased as the thickness of the perpendicular magnetic film B is increased.

However, since the conventional perpendicular magnetic film B is made of a metallic film of MnBi, TbFe or the like, the same has such large optical absorption and reflection properties that it has made it impossible to produce a film which is sufficiently large in thickness. Meanwhile, the Faraday rotation angle or the Kerr rotation angle is substantially in proportion to the saturated magnetization of a magnetic member, so that it is desirable that the perpendicular magnetic film B has a large transmission factor and also a large saturated magnetization.

In FR-A-2485241 there is disclosed a magnetic-optic memory element having an enhanced Kerr rotation angle. The element includes a substrate carrying a perpendicular magnetisation layer, a dielectric layer, and a reflector layer. The perpendicular magnetisation layer and the dielectric layer are quite separate and distinct.

GB-A-1288519 discloses a magneto-optical device comprising a substrate carrying a film of EuO doped with a transition metal having an atomic number in the range of from 21 to 30. The presence of the dopant increases the Curie temperature to about 180°K. The film is a single phase material and there is no suggestion that the device should include a reflector layer.

The earlier EP-A-0 122 030, published on 17.10.84 and having the priority dates of 08.03.83, 26.04.83, 18.05.83 and 21.05.83, discloses a magnetic recording member having a perpendicular magnetic film comprising a two-phase mixture of a ferromagnetic metal and a dielectric oxide thereof. This magnetic film may be backed by a soft magnetic layer and is supported by a substrate.

According to the present invention there is provided an optical magnetic recording member. as set forth in the independent claims.

The present invention enables one to provide an optical magnetic recording member which has a larger polarisation rotation angle than that of the prior proposal.

A mixture-type perpendicular magnetic film of an embodiment of the invention may be formed by a vapor deposition process, an ion plating process, a sputtering process or the like. The film may be a perpendicular magnetic film of Co-O composition series. Fe-O composition series, (CoNi)-O composition series, (Fe, Co, Ni)-O composition series or the like, for example comprising a mixture of columnar particles of a ferromagnetic metal Me which may be a ferromagnetic metal such as Fe, Co, Ni or the like or an alloy thereof, and particles of dielectric which may be an oxide of the ferromagnetic metal Me.

The reflection film may be a vapor deposition film, a sputter film or the like of Al, Cu, Ag, Au, Pt or the like.

For a better understanding of the invention and to show how it may be put into practice, reference will now be made by way of example to the accompanying drawing in which:

Fig. 1 is a sectional view of part of an already proposed optical magnetic recording member;

Fig. 2 is a sectional view of part of an embodiment of the present invention;

Fig. 3 is a sectional view of part of a modification of Figure 2;

Fig. 4 is a diagram showing the relationship between the film thickness of a semi-transparent perpendicular magnetic film and the reflection factor and the polarization rotation angle thereof; and

Fig. 5 is a sectional view of part of another modification of Figure 2.

Figure 2 shows an embodiment of the invention comprising a transparent substrate 1 of any desired shape. The substrate 1 may be made of glass, or an acrylic synthetic resin or the like. Numeral 2 denotes a mixture-type perpendicular magnetic film which is 100-10,000 Å thick, preferably 200-5000 Å thick. The film 2 is preferably above 10% in optical transmission factor, and is made of a two-phase mixture comprising evaporated atoms of Fe, Co, Ni or an alloy thereof, and a dielectric of the oxide formed when some of the evaporated atoms are oxidized by oxygen. Numeral 3 denotes a reflection film which is provided on the rear surface of the magnetic film 2 and has a sufficiently large thickness of above 1000 Å. The film 3 may be made of a metallic vapor deposition film of nonmagnetic metal such as Al, Cu or the like.

Fig. 3 shows a modified example thereof, wherein a transparent thermal insulation layer 4 is interposed between the transparent substrate 1 and the mixture-type perpendicular magnetic film 2, to decrease damage caused by thermal conduction when thermal magnetic recording is carried out by laser irradiation.

If, instead of the non-magnetic metallic material, a comparatively soft magnetic material such as Fe, Co, permalloy or the like is used for the reflection film 3, the polarization rotation angle can be more increased by the following two actions. Namely, one of them is that the soft magnetic reflection film 3 is magnetized by a magnetic field generated from the perpendicular magnetized film 2, and has at and around the boundary surface a magnetic vector which is nearly perpendicular thereto. Thus the laser beam is reflected at that surface, and thereby there is caused a Kerr rotation. The other action is that the film 3 serves to prevent magnetic flux from leaking in the form of a horseshoe, so that a diamagnetic field applied to the perpendicular magnetic film 2 is decreased. Consequently the magnetic vector of the perpendicular magnetic film 2 becomes nearer to a perpendicular line, and both the Faraday rotation and the Kerr rotation become large. This advantage is based on the fact that the two kinds of rotation become a maximum when the magnetic vector becomes a perpendicular one.

Further, if a perpendicular magnetic film of Co-Cr, Tb-Fe or the like is used for the reflection film 3, the magnetic vector at the reflection boundary surface becomes one which is even nearer to a perpendicular line so that the polarization rotation angle becomes even larger.

When this optical magnetic recording member having such a reflection film 3 is used for thermal magnetic recording, the recording is carried out in such a manner that both the mixture-type perpendicular magnetic film 2 and the perpendicular magnetic film of the reflection film 3 are heated by a laser.

As a process for forming a foregoing mixture-type perpendicular magnetic film 2, there may be used any desired and suitable means. For example, a process may be employed in which evaporated atoms or sputtered atoms of the ferromagnetic metal Me are adhered to the transparent substrate 1 while being partly oxidised under the condition that an oxygen gas is being introduced in a vacuum treatment container as previously proposed by the inventors. Alternatively, the ferromagnetic metal Me and the dielectric material such as $SiO_2$ may be simultaneously sputtered to be simultaneously adhered to the substrate surface.

In addition, concerning this invention, in an optical magnetic recording member having the mixture-type perpendicular magnetic film 2 and the reflection film 3 made of each of the foregoing various kinds of materials, the relationship between the thickness of the mixture-type perpendicular magnetic film 2 and the polarization rotation angle obtained when a laser beam to be used for reproducing is reflected, was examined on various members in which the mixture-type perpendicular magnetic films were varied. As a result, it has been found that if the thickness of the magnetic film is made a minimum, the polarization rotation angle is further largely increased. This is due to the fact that there is brought about such an effect that the Faraday rotation is enhanced by an interference effect of the semi-transparent perpendicular magnetic film 2 itself.

An optical magnetic recording member of the present invention may be employed in a system in which the transparent substrate 1 is used and is provided on the mixture-type perpendicular magnetic film 2, and recording and reproduction are carried out by means of a laser beam irradiated from the transparent substrate 1 side. Accordingly, in order that the laser beam for reproducing may be so interfered-with by the mixture-type perpendicular magnetic film 2 that the reflectance or reflection thereof becomes a minimum, it is essential or at least desirable that the refractive index of the mixture-type perpendicular magnetic film 2 is larger than the refractive index of the transparent substrate 1. Where the transparent substrate 1 is a glass substrate or an acrylic resin substrate, the refractive index thereof is about 1.5, so that the dielectric contained in the mixture-type perpendicular magnetic film 2 is to be above 1.5 in refractive index. The film thickness for making the reflectance a minimum depends on the refractive index of the transparent substrate 1 and that of the mixture-type perpendicular magnetic film 2, so that the same should be determined in respect of respective combinations thereof to be used.

Next, this invention will be explained with reference to experimental examples thereof as follows:-

Samples No. 1-No.13 were produced in such a manner that glass plates were used for the respective transparent substrates. The ferromagnetic metals Me as shown in the following Table 1 were subjected to a vapor deposition process in a vacuum treatment container while oxygen gas was being introduced thereinto. The mixture type perpendicular magnetic films of respective thicknesses as shown in the Table 1 were thereby obtained. Then, the respective reflection films of various kinds as shown in the Table 1 were formed on the respective magnetic films.

For measuring the respective polarization rotation angles thereof, each of these samples was placed in an electromagnet and was subjected to an electric field for magnetization thereof. The change in the polarization rotation angle in the course of magnetization thereof was measured, to obtain values of the saturated polarization rotation angles. The measuring was carried out from the glass substates side, and the laser beam employed was 6328 Å in wavelength, from an He-Ne laser.

TABLE 1

| Sample No. | Semi-transparent perpendicular magnetic film | | Reflection film | | Polarization rotation angel (°) |
|---|---|---|---|---|---|
| | Composition | Film thickness (Å) | Kind of material composition (at%) | Film thickness (Å) | |
| 1 | $Co_{0.60}-O_{0.40}$ | 700 | — | — | 0.26 |
| 2 | $Co_{0.60}-O_{0.40}$ | 4000 | — | — | 0.30 |
| 3 | $(Fe_{0.8}-Co_{0.1}-Ni_{0.1})_{0.60}-O_{0.40}$ | 700 | — | — | 0.28 |
| 4 | $(Fe_{0.8}-Co_{0.1}-Ni_{0.1})_{0.60}-O_{0.40}$ | 4000 | — | — | 0.36 |
| 5 | $Co_{0.60}-O_{0.40}$ | 700 | Al | 1000 | 1.45 |
| 6 | $Co_{0.60}-O_{0.40}$ | 700 | Cu | 1000 | 1.55 |
| 7 | $Co_{0.60}-O_{0.40}$ | 700 | Fe—81Ni | 1000 | 1.73 |
| 8 | $Co_{0.60}-O_{0.40}$ | 700 | Co | 1000 | 1.86 |
| 9 | $Co_{0.60}-O_{0.40}$ | 700 | CO—15Cr | 1500 | 1.93 |
| 10 | $Co_{0.60}-O_{0.40}$ | 700 | Fe—25Tb | 1000 | 2.10 |
| 11 | $(Fe_{0.8}-Co_{0.1}-Ni_{0.1})_{0.60}-O_{0.40}$ | 700 | Al | 1000 | 1.51 |
| 12 | $(Fe_{0.8}-Co_{0.1}-Ni_{0.1})_{0.60}-O_{0.40}$ | 700 | Fe | 1000 | 1.65 |
| 13 | $Co+SiO_2$ | 600 | Al | 1000 | 1.20 |
| Convention example | Fe—25Tb | 150 | Al | 1000 | 0.55 |

EP 0 135 322 B2

As will be clear from the foregoing Table 1, where the mixture-type perpendicular magnetic film does not have, at its rear surface, a reflection film, the rotation angle is very small, as in the case of the samples No. 1-4. The inventive samples No. 5-13 however have remarkably large rotation angles, as compared with the samples No. 1-4 or with the already-proposed example. In this case, the rotation angle becomes larger in the following order of samples: No. 5, No. 6, No. 11 (cases using reflection films of non-magnetic materials) No. 7, No. 8, No. 12 (cases using soft metallic magnetic materials) and samples No. 9, No. 10 (cases using metallic perpendicular magnetic films of Co-Cr, Fe-Tb).

Separately therefrom, various samples of different film thicknesses, each having a reflection film of Al and a mixture-type perpendicular magnetic film of $Co_{0.60}$-$O_{0.40}$ composition were prepared. On each of these samples the polarization rotation angle was measured for examining the relationship between the thickness and the rotation angle, to obtain the results as shown in Fig. 4.

It has been found therefrom that the rotation angle is changed if the film thickness is changed, and the reflectance becomes a minimum at a film thickness of 600-800 Å, and the polarization rotation angle thereof becomes a maximum, Almost the same effect can be obtained even if the raw material for the reflection film is changed.

Fig. 5 shows another modified example of this invention, In this example, the substrate 1 may be either a transparent one or a non-transparent one, and is provided on the reflection film 3 side.

## Claims

1. An optical magnetic recording member comprising a semi-transparent perpendicular magnetic film (2), a reflection film (3) backing the perpendicular magnetic film (2), and a transparent substrate (1) supporting these films (2,3), the perpendicular magnetic film (2) being a mixture-type perpendicular magnetic film comprising a two-phase mixture of a ferromagnetic metal Me and a dielectric oxide thereof, characterised in that the substrate is provided on the mixture-type perpendicular magnetic film (2).

2. An optical magnetic recording member as claimed in claim 1 wherein the thickness of the perpendicular magnetic film is from 600 to 800 Å.

3. An optical magnetic recording member comprising a semi-transparent perpendicular magnetic film (2), a reflection film (3) backing the perpendicular magnetic film (2); and a substrate (1) supporting these films (2,3), the perpendicular magnetic film (2) being a mixture-type perpendicular magnetic film comprising a two-phase mixture of a ferromagnetic metal Me and a dielectric oxide thereof, characterised in that the thickness of the perpendicular magnetic film is from 600 to 800 Å.

4. An optical magnetic recording member as claimed in claim 1, wherein a transparent thermal insulation material film (4) is interposed between the transparent substrate (1) and the mixture-type perpendicular magnetic film (2).

5. An optical magnetic recording member as claimed in claim 4, wherein the transparent insulation material film (4) is made of $SiO_2$.

6. An optical magnetic recording member as claimed in any preceding claim, wherein the ferromagnetic metal Me is Fe, Co, Ni or an alloy thereof.

7. An optical magnetic recording member as claimed in any preceding claim, wherein the reflection film (3) is made of a non-magnetic metallic material such as Al, Cu, Ag, Au, Pt.

8. An optical magnetic recording member as claimed in any of claims 1 to 6, wherein the reflection film (3) is made of a soft magnetic material such as permalloy, Fe, Co.

9. An optical magnetic recording member as claimed in any of claims 1 to 6, wherein the reflection film (3) is a metallic perpendicular magnetic film of Co-Cr, Tb-Fe.

10. An optical magnetic recording member as claimed in any preceding claim, wherein the mixture-type perpendicular magnetic film (2) is of such a film thickness that makes the reflection factor thereof substantially the minimum at a predetermined reproducing laser wavelength.

## Patentansprüche

1. Optisch-magnetischer Aufzeichnungsträger, der umfaßt: einen halbtransparenten vertikalmagnetischen Film (2), einen Reflexionsfilm (3), der den vertikalmagnetischen Film (2) auf dessen Rückseite abdeckt, und ein transparentes Substrat (1), das diese Filme (2, 3) trägt, wobei der vertikalmagnetische Film (2) ein vertikalmagnetischer Film vom Gemischtyp ist, der ein Zweiphasen-Gemisch aus einem ferromagnetischen Metall Me und einem dielektrischen Oxid daran enthält, **dadurch gekennzeichnet**, daß das Substrat auf dem vertikalmagnetischen Film (2) des Gemischtyps vorgesehen ist.

2. Optisch-magnetischer Aufzeichnungsträger nach Anspruch 1, bei dem die Dicke des vertikalmagnetischen Films von 60O bis 800 Å beträgt.

3. Optisch-magnetischer Aufzeichnungsträger, der umfaßt: einen halbtransparenten vertikalmagnetischen Film (2), einen Reflexionsfilm (3), der den vertikalmagnetischen Film (2) auf dessen Rückseite abdeckt, und ein Substrat (1), das diese filme (2, 3) trägt, wobei der vertikalmagnetische Film ein vertikalmagnetischer Film vom Gemischtyp ist, der ein Zweiphasen-Gemisch aus einem ferromagnetischen Metall Me und einem dielektrischen Oxid davon enthält, **dadurch gekennzeichnet** , daß die Dicke des vertikalmagnetischen Films von 600 bis 800 ° beträgt.

4. Optisch-magnetischer Aufzeichnungsträger nach Anspruch 1, bei dem ein transparenter, aus thermisch isolierendem Material bestehender Film (4) zwischen dem transparenten Substrat (1) und dem vertikalmagnetischen Film (2) vom Gemischtyp eingefügt ist.

5. Optisch-magnetischer Aufzeichnungsträger nach Anspruch 4, bei dem der transparente Film (4) aus Isoliermaterial aus $SiO_2$ hergestellt ist.

6. Optisch-magnetischer Aufzeichnungsträger nach einem der vorhergehenden Ansprüche, bei dem das ferromagnetische Metall Me Fe, Co, Ni oder eine Legierüng daraus ist.

7. Optisch-magnetischer Aufzeichnungsträger nach einem der vorhergehenden Ansprüche, bei dem der Reflexionsfilm (3) aus einem nichtmagnetischen metallischen Material, wie Al, Cu, Ag, Au, Pt hergestellt ist.

8. Optisch-magnetischer Aufzeichnungsträger nach einem der Ansprüche 1 bis 6, bei dem der Reflexionsfilm (3) aus einem weichmagnetischen Material, wie Permalloy, Fe, Co hergestellt ist.

9. Optisch-magnetischer Aufzeichnungsträger nach einem der Ansprüche 1 bis 6, bei dem der Reflexionsfilm (3) ein metallischer vertikalmagnetischer Film aus Co-Cr, Tb-Fe ist.

10. Optisch-magnetischer Aufzeichnungsträger nach einem der vorhergehenden Ansprüche, bei dem der vertikalmagnetische Film (2) vom Gemischtyp von einer derartigen Filmdicke ist, die den Reflexionsfaktor davon im wesentlichen zu einem Minimum bei einer vorbestimmten Wiedergabe-Laserwellenlänge macht.

## Revendications

1. organe d'enregistrement magnétique et optique comprenant une pellicule magnétique perpendiculaire semi-transparente (2), une pellicule réfléchissante (3) au dos de la pellicule magnétique perpendiculaire (2), et un substrat transparent (1) portant (2, 3), la pellicule magnétique perpendiculaire (2) étant une pellicule magnétique perpendiculaire comprenant un mélange à deux phases d'un métal ferromagnétique Me et d'un oxyde diélectrique de celui-ci, caractérisé en ce que le substrat est disposé sur la pellicule magnétique perpendiculaire de type mélange (2).

2. organe d'enregistrement magnétique et optique selon la revendication 1, dans lequel l'épaisseur de la pellicule magnétique perpendiculaire est de 600 à 800 Å.

3. Organe d'enregistrement magnétique et optique comprenant une pellicule magnétique perpendiculaire semi-transparente (2), une pellicule réfléchissante (3) au dos de la pellicule magnétique perpendiculaire (2), et un substrat (1) portant ces pellicules (2, 3), la pellicule magnétique perpendiculaire (2) étant une pellicule magnétique perpendiculaire de type mélange comprenant un mélange à deux phases d'un métal ferromagnétique Me et d'un oxyde diélectrique de celui-ci, caractérisé en ce que l'épaisseur de la pellicule magnétique perpendiculaire est de 600 à 800 Å.

4. Organe d'enregistrement magnétique et optique selon la revendication 1, dans lequel un matériau d'isolation thermique transparent (4) est interposé entre le substrat transparent (1) et la pellicule magnétique perpendiculaire de type mélange (2).

5. Organe d'enregistrement magnétique et optique selon la revendication 4, dans lequel la pellicule de matériau transparent d'isolation thermique (4) est constituée de $SiO_2$.

6. Organe d'enregistrement magnétique et optique selon l'une quelconque des revendications précédentes, dans lequel le métal ferromagnétique Me est Fe, Co, Ni ou l'un de leurs alliages.

7. Organe d'enregistrement magnétique et optique selon l'une quelconque des revendications précédentes, dans lequel la pellicule réfléchissante (3) est constituée d'un matériau métallique non magnétique tel que Al, Cu, Ag, Au, Pt.

8. Organe d'enregistrement magnétique et optique selon l'une quelconque des revendications 1 à 6, dans lequel la pellicule réfléchissante (3) est constituée d'un matériau magnétique doux tel que le permalloy, Fe, Co.

9. Organe d'enregistrement magnétique et optique selon l'une quelconque des revendications 1 à 6, dans lequel la pellicule réfléchissante (3) est une pellicule magnétique perpendiculaire de Co-Cr, Tb-Fe.

10. Organe d'enregistrement magnétique et optique selon l'une quelconque des revendications précédentes, dans lequel la pellicule magnétique perpendiculaire de type mélange (2) a une épaisseur telle que sont facteur de réflexion est atteint pratiquement une valeur minimale à la longueur d'onde laser prédéterminée de reproduction.

# F I G.1

A
B C

# F I G.2

1
2 3

# F I G.3

1
2 3 4

# F I G.5

2
3
1

# F I G.4

Film thickness ($\overset{\circ}{A}$)

Polarization rotation angle ($^\circ$) — vertical axis: 0, 0.4, 0.8, 1.2, 1.6

Reflection factor ($\lambda = 6328\overset{\circ}{A}$)% — vertical axis: 20, 40, 60, 80

Film thickness axis: 200, 400, 600, 800, 1000, 1200